(19) **Europäisches Patentamt / European Patent Office / Office européen des brevets**

(11) **EP 2 128 294 B1**

(12) **EUROPEAN PATENT SPECIFICATION**

(45) Date of publication and mention of the grant of the patent:
**23.05.2018 Bulletin 2018/21**

(21) Application number: **09001551.2**

(22) Date of filing: **04.02.2009**

(51) Int Cl.:
*C22C 38/00* (2006.01)  *C22C 38/02* (2006.01)
*C22C 38/06* (2006.01)  *C22C 38/42* (2006.01)
*C22C 38/44* (2006.01)  *C22C 38/46* (2006.01)
*C22C 38/48* (2006.01)  *C22C 38/50* (2006.01)
*C22C 38/04* (2006.01)  *C22C 38/08* (2006.01)
*C22C 38/12* (2006.01)  *C22C 38/16* (2006.01)
*B32B 15/01* (2006.01)

(54) **Base metal for clad steel plate having high strength and excellent toughness in welding heat-affected zone, and method of producing the same**

Grundmetall für eine verkleidete Stahlplatte mit hoher Stärke und ausgezeichneter Härte beim Schweißen der betroffenen Bereiche und Verfahren zu dessen Herstellung

Métal commun pour plaque revêtue d'acier ayant une grande force et une excellente résistance dans la zone affectée par la chaleur de soudage, et son procédé de production

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.02.2008 JP 2008029251**

(43) Date of publication of application:
**02.12.2009 Bulletin 2009/49**

(73) Proprietor: **The Japan Steel Works, Ltd.**
**Tokyo**
**141-0032 (JP)**

(72) Inventors:
• **Sato, Shinya**
  **Muroran-shi**
  **Hokkaido (JP)**
• **Kayano, Rinzo**
  **Muroran-shi**
  **Hokkaido (JP)**
• **Nitta, Yukio**
  **Muroran-shi**
  **Hokkaido (JP)**
• **Sakuraba, Masahiro**
  **Muroran-shi**
  **Hokkaido (JP)**

(74) Representative: **Grünecker Patent- und Rechtsanwälte**
**PartG mbB**
**Leopoldstraße 4**
**80802 München (DE)**

(56) References cited:
**EP-A- 1 726 675     JP-A- 2007 131 925**

• **THOMPSON A W ET AL: "Selection of structural materials for hydrogen pipelines and storage vessels" INTERNATIONAL JOURNAL OF HYDROGEN ENERGY, ELSEVIER SCIENCE PUBLISHERS B.V., BARKING, GB, vol. 2, no. 2, 1 January 1977 (1977-01-01), pages 163-173, XP025567859 ISSN: 0360-3199 [retrieved on 1977-01-01]**
• **YURIOKA N: "TMCP steels and their welding" WELDING IN THE WORLD, ELSEVIER / INTERNATIONAL INSTITUTE OF WELDING, ROISSY, FR, vol. 35, no. 6, 12 November 1995 (1995-11-12), pages 375-390,427, XP004032186 ISSN: 0043-2288**
• **YURIOKA ET AL: "Impact of welding research on steel composition development" MATERIALS AND DESIGN, LONDON, GB, vol. 6, no. 4, 1 August 1985 (1985-08-01), pages 154-171, XP024153444 ISSN: 0261-3069 [retrieved on 1985-08-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

1. Field of the Invention

The present invention relates to a clad steel plate which can be preferably used for pipelines for transporting natural gas.

2. Description of the Related Art

Since natural gas causes little air pollution as compared with oil-based energy, it is expected that demands for natural gas as clean energy further increase. In addition, a plan for natural gas pipeline construction is greatly accelerated as an international economic policy. In natural gas extraction, in many cases, other high-corrosive gas, such as hydrogen sulfide, carbon dioxide gas and chlorine ions, is included in desired gas. Accordingly, for a steel pipe capable of withstanding use under a high-corrosive environment, a clad steel plate and a clad pipe in which stainless steel or high-alloy steel having excellent corrosion resistance and low-alloy steel having a high strength and a high toughness are bonded to each other are used.

EP 1726675 relates to a base material for clad steel and a method for producing clad steel from same. The described matrix for the clad steel is characterized by an enhanced low temperature toughness in a heat-affected zone by one-pass welding. This excellent low-temperature toughness is achieved by forming a binitic structure within the matrix material as well as in the region ranging from the fusion line portion to the AHZ. The described material aims to be formed without any martensite structure and no martensite structure is formed in the matrix and the heat-affected zone in order to limit the HAZ hardness to HV 270 or less.

A base metal for a clad steel plate has a high strength of API X70 grade and an excellent low temperature toughness by properly adding alloy elements to C-Mn steel as a base in a balanced manner and properly setting heat treatment conditions for quenching/tempering (hereinafter, refining) after rolling, and it is possible to produce a clad steel plate having sufficient performance in a welded zone after welding (refer to, for example, JP-A-2006-328460). Meanwhile, in recent years, for onshore pipelines, requirements of users for higher-strength steel pipes are increased in order to improve the security in use in a high-pressure operation or in cold climates and reduce project development cost by the thinning of steel pipes. High-strength steel pipes excellent in security and economic efficiency are highly demanded also in clad steel pipes. In addition, gas fields, which are found with the improvement in gas field development techniques, and various steel pipe installation methods make the environment, in which clad steel pipes are used, worse. Accordingly, a high strength and a high toughness are further required.

For high-strength steel pipes, for example, JP-A-2007-131925 discloses a method of producing an X120 grade steel plate has been developed to improve a transportation efficiency by a high pressure in line pipes for long-distance transportation and to improve a field construction efficiency by the reduction of a thickness and a pipe diameter. Through the producing method, hardenability is improved by properly adding alloy elements and a high-strength and high-toughness steel plate which has a desired structure and a desired grain size can be produced by the processing of a non-recrystallized region with controlled rolling and the adjustment of a cooling rate.

The method of producing a clad steel plate includes roughly rolling low-alloy steel as a base metal and a rolling slab such as stainless steel as a cladding metal, combining the low-alloy steel with the rolling slab, heating the combined low-alloy steel and rolling slab to about 1200°C, and bonding the low-alloy steel and the rolling slab by clad rolling. After the rolling, refining is performed in order to adjust mechanical properties of the base metal and thus a clad steel plate having a predetermined material strength is manufactured. Meanwhile, for the cladding metal, it is important to ensure corrosion resistance. However, there is a possibility that carbide, an intermetallic compound and the like deteriorating the corrosion resistance can be precipitated by the heat upon the rough rolling and clad rolling, and quenching after the rolling is a solution heat treatment for changing the precipitate into a solid solution. Accordingly, the quenching is an important process for a clad steel plate.

TMCP is a producing process for producing a steel plate which is excellent in strength and toughness as rolling. By applying TMCP to a steel plate for a linepipe, a steel pipe having a high strength equal to or higher than X80 grade can be produced. However, in the case of clad steel plate, there is concern that the corrosion resistance of the cladding metal decreases during rolling, and as described above, it is necessary to perform the quenching for ensuring the corrosion resistance. Accordingly, the clad steel plate is manufactured by performing refining.

Regarding a base metal for a clad steel plate manufactured by quenching/tempering, JP-A-2006-328460 discloses a base metal which has a fine bainite structure by properly adding alloy elements and properly setting heat treatment conditions. However, a material strength of the base metal discloses by JP-A-2006-328460 does not reach a strength equal to or higher than X80 grade and a high strength cannot be given to a clad steel pipe.

# EP 2 128 294 B1

## SUMMARY OF THE INVENTION

An object of the invention is to provide a clad steel plate which is produced by refining and has an excellent toughness in the base metal and a welding heat-affected zone with no damage on weldability and a high strength equal to or higher than X80 grade by adjusting the addition of a small amount of additional elements, improving a material strength by solid solution strengthening and precipitation strengthening, improving hardenability of steel, optimizing a grain size, and finely dividing grains of the base metal and the welding heat-affected zone by fine precipitate, and a method of producing the clad steel plate.

According to a first aspect of the invention, there is provided a clad steel plate comprising: 0.05 to 0.10% by mass of C; 0.10 to 0.30% by mass of Si; 1.30 to 1.70% by mass of Mn; 0.015% or less by mass of P; 0.005% or less by mass of S; 0.10 to 0.60% by mass of Ni; 0.10 to 0.45% by mass of Cr; 0.05 to 0.40% by mass of Cu; 0.05 to 0.40% by mass of Mo; 0.02 to 0.06% by mass of V; 0.03 to 0.10% by mass of Nb; 0.005 to 0.025% by mass of Ti; 0.020 to 0.050% by mass of A1; 0.0010 to 0.0040% by mass of Ca; and 0.0030 to 0.0100% by mass of N with the remainder including Fe and inevitable impurities and in which the content of Ni, Cr, Cu and Mo satisfies the equation $0.90\% \leq$ (Ni + Cr + Cu + Mo) $\leq 1.20\%$, wherein a microstructure of the base metal comprises a martensite structure.

A second aspect of the invention relates to the clad steel plate, wherein in the composition, a carbon equivalent ($C_{eq}$) in Equation 1 is in the range of 0.380 to 0.480 and weld cold cracking susceptibility factor ($P_{CM}$) in Equation 2 is equal to or less than 0.200, where (Equation 1) $C_{eq}$ = C + Mn/6 + (Cu+Ni)/15 + (Cr+Mo+V)/5 (mass%); and (Equation 2) $P_{CM}$ = C + Si/30 + Mn/20 + Cu/20 + Ni/60 + Cr/20 + Mo/15 + V/10 (mass%).

According to a third aspect of the invention, a Ti/N ratio in the clad steel plate is in the range of 1.5 to 3.0.

According to a fourth aspect of the invention, wherein a grain size of the clad steel plate is in the range of 5 to 11 in terms of an austenite grain size number.

According to a fifth aspect of the invention, there is provided a method of producing the clad steel plate, the method comprising: producing a steel ingot by melting an alloy for the base metal, which has the composition according to any one of claims 1 to 3; performing rolling; performing quenching from an austenitizing temperature ranging from 900 to 1100°C; and performing tempering at a temperature of 550 to 650°C which is equal to or lower than an $A_{C1}$ transformation point.

As described above, according to a clad steel plate of the invention, which has a high strength and an excellent toughness in a welding heat-affected zone, the clad steel plate has a composition which contains 0.05 to 0.10% of C, 0.10 to 0.30% of Si, 1.30 to 1.70% of Mn, 0.015% or less of P, 0.005% or less of S, 0.10 to 0.60% of Ni, 0.10 to 0.45% of Cr, 0.05 to 0.40% of Cu, 0.05 to 0.40% of Mo, 0.02 to 0.06% of V, 0.03 to 0.10% of Nb, 0.005 to 0.025% of Ti, 0.020 to 0.050% of Al, 0.0010 to 0.0040% of Ca and 0.0030 to 0.0100% of N in terms of mass% with the remainder including Fe and inevitable impurities and in which the content of Ni, Cr, Cu and Mo satisfies the equation $0.90\% \leq$ Ni+Cr+Cu+Mo $\leq 1.20\%$. In addition, the microstructure of the base metal is a martensite structure. The clad steel plate has a high strength equal to or higher than API X80 grade, an excellent low temperature toughness and high toughness characteristics in a welding heat-affected zone.

In addition, according to a method of producing a base metal for a clad steel plate having a high strength and an excellent toughness in a welding heat-affected zone, a steel ingot is produced by melting an alloy having the above composition and then subjected to rolling. After that, quenching is performed from an austenitizing temperature ranging from 900 to 1100°C and then tempering is performed at a temperature of 550 to 650°C which is equal to or lower than an $A_{C1}$ transformation point. Accordingly, a steel plate which has a high strength equal to or higher than API X80 grade can be produced and a high strength and a high toughness of a clad steel pipe can be achieved.

Due to the high strength and high toughness of the clad steel pipe, security is improved, material usage is reduced with the decrease of the thickness of the steel pipe, an efficiency increases with the increase of an operation pressure, and it is possible to deal with various installation conditions and a deep-sea environment. Moreover, since component design considering weldability and a high strength is performed, the low temperature toughness in a welding heat-affected zone is excellent and the carbon equivalent and the cracking susceptibility index are suppressed to become low. Accordingly, field welding workability can be also achieved without difficulty.

## DETAILED DESCRIPTION OF THE PREFERRED EMBODIMENTS

Hereinafter, an embodiment of the invention will be described.

Hereinafter, the reasons of limitation on compositions and the like determined in the invention and the actions thereof will be described. Each content is expressed in mass%.

C: 0.05 to 0.10%

C is an additional element which is effective in improving a strength of steel. When the content of C is small, C does not have a sufficient effect on improving the strength, so the content of C is equal to or higher than 0.05%. On the other hand, when the content of C is too high, weldability decreases or a HAZ toughness significantly deteriorates, so the upper limit of the content of C is set to 0.10%.

Si: 0.10 to 0.30%

Si is a component which is effective in deoxidation, ensuring a strength of a base metal, and the like. To obtain such an effect, it is necessary that the content of Si is at least equal to or higher than 0.10%. However, when the content of Si is too high, a HAZ toughness decreases upon welding and thus the upper limit of the content of Si is set to 0.30%.

Mn: 1.30 to 1.70%

Mn is a component which is effective in improving hardenability and improving the strength and toughness of the base metal, and it is necessary that the content of Mn is equal to or higher than 1.30%. However, when a large amount of Mn is contained, the toughness of a welded portion decreases and cracking occurs, so the upper limit of the content of Mn is set to 1.70%. For the same reason, the lower limit and the upper limit are preferably set to 1.40% and 1.60%, respectively.

P: 0.015% or lower

P is an impurity element and the content of P is preferably as small as possible. However, the upper limit of the content of P is set to 0.015% in view of industrial feasibility.

S: 0.005% or lower

S is an impurity element and the content of S is preferably as small as possible. However, the upper limit of the content of S is set to 0.005% in view of industrial feasibility. In addition, the upper limit is preferably set to 0.003% or lower.

Ni: 0.10 to 0.60%

Ni is an additional element which is effective in improving the strength and low temperature toughness of the base metal. However, when a large amount of Ni is added, producing cost increases, so the lower limit of the content of Ni is 0.10% and the upper limit of the content of Ni is 0.60%. For the same reason, the lower limit and the upper limit are preferably set to 0.25% and 0.50%, respectively.

Cr: 0.10 to 0.45%

Cr improves the strength and toughness of the base metal. However, when a large amount of Cr is contained, cracking susceptibility increases, so the lower limit and the upper limit of the content of Cr are set to 0.1% and 0.45%, respectively. For the same reason, the upper limit is preferably set to 0.35%.

Cu: 0.05 to 0.40%

Cu is effective in improving the strength of the base metal. However, when the content of Cu is too high, cracking susceptibility upon welding increases, so the lower limit and the upper limit of the content of Cu are set to 0.05% and 0.40%, respectively. For the same reason, the lower limit and the upper limit are preferably set to 0.10% and 0.30%, respectively.

Mo: 0.05 to 0.40%

Mo is an element which is effective in improving hardenability and stably improving the strength and toughness of the base metal after a solution heat treatment. However, when the content of Mo is too high, the toughness of the HAZ zone is damaged, so the lower limit and the upper limit of the content of Mo are set to 0.05% and 0.40%, respectively. For the same reason, the lower limit and the upper limit are preferably set to 0.10% and 0.30%, respectively.

V: 0.020 to 0.060%

V is an element which is important to ensure the strength of steel. However, when the content of V is too high, a value of the toughness is negatively affected, so the lower limit and the upper limit of the content of V are set to 0.020% and 0.060%, respectively. For the same reason, the lower limit and the upper limit are preferably set to 0.030% and 0.050%, respectively.

Al: 0.020 to 0.050%

Al is effective in deoxidation and fine-division of grains. However, when a too large amount of Al is added, nitride and the like are formed and there is concern that bad effects such as the deterioration of the toughness and the cracking of a steel ingot are caused, so the lower limit and the upper limit of the content of Al are set to 0.020% and 0.050%, respectively. For the same reason, the lower limit and the upper limit are preferably set to 0.030% and 0.040%, respectively.

Nb: 0.03 to 0.10%

When steel is heated to solid solution temperature, fine Nb carbide and the like are uniformly dispersed in the base metal. In this manner, Nb prevents the coarsening of austenite grains. In addition, Nb is effective in fine-division of grains and improving the strength. Accordingly, 0.03% or more of Nb is contained. However, when the content of Nb is higher than 0.10%, problems in production, such as the generation of surface defects in a steel ingot, occur, so the content of Nb is equal to or lower than 0.10%. For the same reason, the lower limit and the upper limit of the content of Nb are preferably set to 0.04% and 0.09%, respectively. The upper limit is more preferably set to 0.08%.

Ti: 0.005 to 0.025%

Ti allows the generation of nitride or carbide which is finely dispersed in steel, and has an effect of finely dividing austenite grains. In addition, as described later, nitride generated by the combination of Ti and N has an effect of suppressing the coarsening of grains of a welding heat-affected zone upon welding. When the content of Ti is lower than 0.005%, its effect is small, and when the content of Ti is higher than 0.025%, a notch effect caused by the coarsening and the aggregation of carbide or nitride, causes drastic deterioration of the toughness, so the lower limit and the upper limit of the content of Ti are set to 0.005% and 0.025%, respectively. For the same reason, the lower limit and the upper limit are preferably set to 0.010% and 0.020%, respectively.

Ca: 0.0010 to 0.0040%

Ca has an effect of improving hydrogen-induced cracking resistance susceptibility and forms a compound together with S or the like. CaS thus formed is spherical and forms oxide to enhance an impact value. This effect can be exhibited particularly when the content of Ca is equal to or higher than 0.0010%. However, when 0.0040% of Ca is contained, surface defects are generated in a steel ingot. In addition, the hydrogen-induced cracking resistance susceptibility deteriorates or coarse inclusions are produced, so the upper limit of the content of Ca is set to 0.0040%. For the same reason, the lower limit and the upper limit of the content of Ca are preferably set to 0.0020% and 0.0030%, respectively.

N: 0.0030 to 0.0100%

N reacts with Ti and is precipitated as TiN in steel to exhibit an effect of finely dividing grains. In addition, solid solution temperature of N is high and thus N is stably present even at relatively high temperature. Accordingly, N suppresses the coarsening of grains of a welding heat-affected zone and thus is very effective in improving a HAZ toughness. When an additional amount of N is too small, a sufficient effect cannot be obtained, so the lower limit of the content of N is set to 0.0030%. However, when the content of N is higher than 0.0100%, N solid solution increases and a HAZ toughness decreases, so the upper limit of the content of N is set to 0.0100%.

Ni+Cr+Cu+Mo: equal to or higher than 0.90% and equal to or lower than 1.20%

Elements including Ni, Cr, Cu and Mo which are added in a small amount are important additional elements for achieving a high strength with no damage on weldability, and thus hardenability is improved, a material strength is improved by solid solution strengthening and precipitation strengthening, a low temperature toughness is strengthened, and a structure is finely divided.

In the invention, the reason for 0.90% ≤ Ni+Cr+Cu+Mo ≤ 1.20% is as follows. When the content of them is lower than 0.90%, the content is small and desired performance cannot be obtained, so the lower limit of the content of them is set to 0.90%. When the content of them is high, the strength is improved, but a carbon equivalent and a welding cracking susceptibility index to be described later increase, so the upper limit of the content of them is set to 1.20% to exhibit sufficient strength and toughness and not to cause a bad effect on weldability.

Ti/N: 1.5 to 3.0

TiN, which is stable and finely dispersed, is generated by properly setting a ratio of Ti to N to finely divide a heat-affected zone of the base metal upon welding and prevent the coarsening of grains of a welding heat-affected zone. Accordingly, the ratio of Ti to N is adjusted as needed. When the ratio is lower than 1.5, an effect of finely dividing grains cannot be sufficiently obtained, and particularly, a problem occurs in that grains of a welding heat-affected zone are coarsened upon welding and thus the toughness largely decreases. On the other hand, when the ratio is higher than 3.0%, a too large amount of TiN is precipitated and the toughness of the base metal significantly decreases by the coarsening of TiN. Thus, the ratio of Ti to N is set to 1.5 to 3.0.

Alloy elements are added to improve hardenability of steel and apply desired strength and toughness with other characteristics. In order to produce a steel plate having a high strength and a high toughness, it is necessary to increase an additional amount of alloy elements as compared with conventional cases. The increase in additional amount of alloy elements is effective in increasing the strength, but occurs the hardening of a heat-affected zone upon welding, and thus welding cracking occurs or field welding workability deteriorates. Accordingly, in recent years, in general, the ranges for components are determined by a carbon equivalent ($C_{eq}$) and a weld cold cracking susceptibility factor ($P_{CM}$).

Accordingly, preferable ranges for components are determined as follows so as to increase the strength with no damage on weldability. When the carbon equivalent is higher than 0.480%, weldability decreases and practicality deteriorates. For these reasons, the carbon equivalent is set to 0.480% or lower, so good weldability is ensured. However, since the addition of alloy is necessary to obtain a high strength equal to or higher than X80, the lower limit of the carbon equivalent is set to 0.380%. The cracking susceptibility index increases together with the additional amount of alloy elements. However, when the cracking susceptibility index is higher than 0.200%, practicality deteriorates and difficulty is caused in use. Thus, the cracking susceptibility index is limited to the range equal to or lower than 0.200%.

Next, the range for a grain size will be described. The fine division of grains is effective in improving a strength and a toughness. However, in general, unlike TMCP, the fine-division of grains in a steel plate produced by refining is difficult. In the invention, by optimizing the additional amount of alloy elements, the growth of grains is suppressed using fine precipitate, and thus a martensite structure having significantly fine grains, specifically, having 5 to 11 of a grain size number after refining can be obtained. Incidentally, the grain size number is measured based on JIS G 0551.

Next, conditions for a producing method of the invention will be described.

A heat treatment temperature is a standard heat treatment condition for the combination of a cladding metal and a base metal to be used as a clad steel plate. The invention can be produced by a general clad steel plate producing method without the use of a particular device and a particular method.

A clad steel of the invention is adjusted to have the above-described component ranges, and can be melted in accordance with a general method. The cladding metal is selected in accordance with a use environment and the like, and when the base metal is used for natural gas pipelines, stainless steel such as SUS316L or a high alloy such as Alloy 825 can be used. Further, when the whole thickness of the base metal stacked into two is equal to or less than 100 mm, the base metal is stacked into two to be rolled and refined. Furthermore, in the invention, conditions for clad rolling are not particularly limited.

After the clad rolling, the base metal is heated to a temperature ranging from 900 to 1100°C and quenching is performed from an austenitizing temperature range. Then, tempering is performed at a temperature of 550 to 650°C which is equal to or lower than an $A_{C1}$ transformation point to perform refining.

(Example)

Sample steel of 50kg, having a composition (mass%, the remainder including Fe and other inevitable impurities) shown in Table 1, was melted by vacuum induction melting and then was hot-rolled up to 25 mm. After the rolling, quenching was performed at 980°C for 2 hours on the basis that a cladding metal was SUS316L, and then tempering was performed at 580°C for 2 hours.

A tensile test and a Charpy impact test were performed as a test for performance of the base metal. For a welding test, SAW welding for longitudinal welding upon manufacturing of a steel pipe was performed, and a toughness of a welding heat-affected zone of the base metal was evaluated by the Charpy impact test.

Table 2 shows the mechanical test results of invention materials and comparative materials. The invention materials have a strength of API X80 or higher with Y.S. (0.5% under load) and T.S., and are greatly improved in strength as compared with the comparative materials. In addition, impact characteristics of base metals are stable even at a test temperature of -40°C, and thus Charpy absorption energy of 100 J or more is obtained and an excellent low temperature toughness is exhibited. The microstructure is a martensite structure and a grain size is in the range of 5 to 11. It is thought that the grains finely divided by an effect of a small amount of additional elements contribute to the excellent low temperature toughness.

[Table 1]

| No. | Category | C | Si | Mn | P | S | Ni | Cr | Cu | Mo | V | Al | Nb | Ti | Ca | N | Ti/N | $C_{eq}$ | $P_{CM}$ | Ni+Cr+Cu+Mo |
|---|---|---|---|---|---|---|---|---|---|---|---|---|---|---|---|---|---|---|---|---|
| 1 | Invention Materials | 0.06 | 0.20 | 1.51 | 0.008 | 0.0027 | 0.41 | 0.20 | 0.15 | 0.22 | 0.04 | 0.033 | 0.043 | 0.013 | 0.0020 | 0.0062 | 2.1 | 0.441 | 0.185 | 0.98 |
| 2 | Invention Materials | 0.06 | 0.20 | 1.54 | 0.009 | 0.0027 | 0.39 | 0.20 | 0.15 | 0.20 | 0.05 | 0.034 | 0.042 | 0.016 | 0.0020 | 0.0055 | 2.9 | 0.443 | 0.186 | 0.93 |
| 3 | Materials not according to the invention | 0.06 | 0.20 | 1.53 | 0.009 | 0.0027 | 0.33 | 0.18 | 0.11 | 0.18 | 0.05 | 0.033 | 0.043 | 0.015 | 0.0020 | 0.0057 | 2.6 | 0.426 | 0.180 | 0.80 |
| 4 | Materials not according to the invention | 0.06 | 0.20 | 1.53 | 0.008 | 0.0027 | 0.35 | 0.15 | 0.03 | 0.20 | 0.04 | 0.040 | 0.086 | 0.014 | 0.0019 | 0.0061 | 2.3 | 0.418 | 0.175 | 0.73 |
| 5 | Materials not according to the invention | 0.056 | 0.20 | 1.45 | 0.008 | 0.0027 | 0.38 | 0.12 | 0.13 | 0.13 | 0.037 | 0.033 | 0.043 | 0.016 | 0.0020 | 0.0058 | 2.8 | 0.394 | 0.166 | 0.76 |
| 6 | Invention Materials | 0.06 | 0.21 | 1.54 | 0.008 | 0.0026 | 0.41 | 0.24 | 0.20 | 0.21 | 0.04 | 0.033 | 0.044 | 0.015 | 0.0019 | 0.0057 | 2.6 | 0.455 | 0.191 | 1.06 |
| 7 | Material not according to the invention | 0.06 | 0.19 | 1.53 | 0.009 | 0.003 | 0.47 | 0.28 | 0.23 | 0.26 | 0.04 | 0.03 | 0.038 | 0.015 | 0.0019 | 0.0057 | 2.6 | 0.477 | 0.197 | 1.24 |
| 8 | Comparative Materials | 0.06 | 0.20 | 1.52 | 0.008 | 0.0027 | 0.26 | 0.04 | 0.05 | 0.17 | 0.035 | 0.032 | 0.080 | 0.014 | 0.0027 | 0.0056 | 2.5 | 0.383 | 0.166 | 0.52 |
| 9 | Comparative Materials | 0.06 | 0.21 | 1.48 | 0.008 | 0.0030 | 0.29 | 0.14 | 0.05 | 0.14 | 0.039 | 0.034 | 0.045 | 0.014 | 0.0027 | 0.0056 | 2.5 | 0.393 | 0.169 | 0.62 |
| 10 | Comparative Materials | 0.06 | 0.20 | 1.48 | 0.009 | 0.0030 | 0.31 | 0.11 | 0.11 | 0.11 | 0.030 | 0.033 | 0.078 | 0.012 | 0.0025 | 0.0057 | 2.1 | 0.385 | 0.167 | 0.64 |
| 11 | Comparative Materials | 0.06 | 0.20 | 1.64 | 0.009 | 0.0030 | 0.40 | 0.25 | 0.21 | 0.24 | 0.047 | 0.038 | 0.083 | 0.013 | 0.0025 | 0.0058 | 2.2 | 0.482 | 0.199 | 1.10 |
| 12 | Comparative Materials | 0.06 | 0.20 | 1.54 | 0.009 | 0.004 | 0.50 | 0.41 | 0.30 | 0.22 | 0.04 | 0.032 | 0.039 | 0.015 | 0.0020 | 0.0059 | 2.5 | 0.504 | 0.206 | 1.43 |

[Table 2]

| | | Tensile Strength of Base metal | | | | Impact Characterises of Base metal vE-40°C (J) | HAZ Impact Characteristics vE-40°C (J) | Grain Size of Base metal Grain Size Number |
|---|---|---|---|---|---|---|---|---|
| | | Y.S. (0.5% Under Load) | T.S. (MPa) | El. (%) | R.A. (%) | | | |
| Invention Materials | 1 | 704 | 770 | 21.6 | 71.3 | 143 | 133 | 6.4 |
| | 2 | 669 | 746 | 23.2 | 75.0 | 179 | 146 | 8.4 |
| Materials not according to the invention | 3 | 637 | 726 | 24.4 | 76.2 | 167 | 136 | 7.0 |
| | 4 | 614 | 698 | 24.0 | 78.5 | 163 | 128 | 10.8 |
| | 5 | 627 | 690 | 23.8 | 76.0 | 146 | 119 | 7.4 |
| Invention Materials | 6 | 708 | 778 | 22.4 | 74.6 | 166 | 121 | 7.8 |
| Materials not according to the invention | 7 | 750 | 827 | 21.9 | 69.9 | 162 | 105 | 6.8 |
| Comparative Materials | 8 | 511 | 600 | 28.5 | 85.2 | 296 | 150 | 11.4 |
| | 9 | 540 | 629 | 26.2 | 78.2 | 240 | 188 | 10.1 |
| | 10 | 568 | 660 | 26.8 | 68.8 | 177 | 133 | 10.2 |
| | 11 | 736 | 798 | 22.9 | 76.3 | 137 | 88 | 6.8 |
| | 12 | 750 | 819 | 22.1 | 72.1 | 112 | 79 | 6.1 |

**Claims**

1. A clad steel plate comprising: 0.05 to 0.10% by mass of C; 0.10 to 0.30% by mass of Si; 1.30 to 1.70% by mass of Mn; 0.015% or less by mass of P; 0.005% or less of mass of S; 0.10 to 0.60% by mass of Ni; 0.10 to 0.45% by mass of Cr; 0.05 to 0.40% by mass of Cu; 0.05 to 0.40% by mass of Mo; 0.02 to 0.06% by mass of V; 0.03 to 0.10% by mass of Nb; 0.005 to 0.025% by mass of Ti; 0.020 to 0.050% by mass of Al; 0.0010 to 0.0040% by mass of Ca; and 0.0030 to 0.0100% by mass of N with the remainder including Fe and inevitable impurities and in which the content of Ni, Cr, Cu and Mo satisfies the equation 0.90% ≤ (Ni + Cr + Cu + Mo) ≤ 1.20%, wherein a microstructure of the base metal comprises a martensite structure.

2. The clad steel plate according to claim 1, wherein in the composition, a carbon equivalent (Ceq) in Equation 1 is in the range of 0.380 to 0.480 and weld cold cracking susceptibility factor (PCM) in Equation 2 is equal to or less than 0.200, where

(Equation 1)

$$Ceq = C + Mn/6 + (Cu+Ni)/15 + (Cr+Mo+V)/5 \text{ (mass\%)};$$

and

(Equation 2)

$$PCM = C + Si/30 + Mn/20 + Cu/20 + Ni/60 + Cr/20 + Mo/15 + V/10 \text{ (mass \%)}.$$

3. The clad steel plate according to claim 1 or 2,

wherein a Ti/N ratio is in the range of 1.5 to 3.0.

4. The clad steel plate according to any one of claims 1 to 3,
   wherein a grain size is in the range of 5 to 11 in terms of an austenite grain size number.

**Patentansprüche**

1. Plattiertes Stahlblech umfassend: 0,05 bis 0,10 Masse-% C; 0,10 bis 0,30 Masse-% Si; 1,30 bis 1,70 Masse-% Mn; 0,015 Masse-% oder weniger P; 0,005 Masse-% oder weniger S; 0,10 bis 0,60 Masse-% Ni; 0,10 bis 0,45 Masse-% Cr; 0,05 bis 0,40 Masse-% Cu; 0,05 bis 0,40 Masse-% Mo; 0,02 bis 0,06 Masse-% V; 0,03 bis 0,10 Masse-% Nb; 0,005 bis 0,025 Masse-% Ti; 0,020 bis 0,050 Masse-% Al; 0,0010 bis 0,0040 Masse-% Ca; und 0,0030 bis 0,0100 Masse-% N, wobei der Rest Fe und unvermeidbare Verunreinigungen enthält, und wobei der Gehalt an Ni, Cr, Cu und Mo die Gleichung 0,90% ≤ (Ni + Cr + Cu + Mo) ≤ 1,20% erfüllt,
   wobei eine Mikrostruktur des Grundmetalls eine Martensittruktur umfasst.

2. Plattiertes Stahlblech nach Anspruch 1,
   wobei in der Zusammensetzung ein Kohlenstoffäquivalent (Ceq) in Gleichung 1 in dem Bereich von 0,380 bis 0,480 liegt und ein Schweißriss-Anfälligkeitsfaktor (weld cold cracking susceptibility factor) (PCM) in Gleichung 2 0,200 oder weniger ist, wobei

   (Gleichung 1)

$$Ceq = C + Mn/6 + (Cu+Ni)/15 + (Cr+Mo+V)/5 \ (Masse\text{-}\%);$$

   und

   (Gleichung 2)

$$PCM = C + Si/30 + Mn/20 + Cu/20 + Ni/60 + Cr/20 + Mo/15 + V/10 \ (Masse\text{-}\%).$$

3. Plattiertes Stahlblech nach Anspruch 1 oder 2,
   wobei ein Ti/N Verhältnis in dem Bereich von 1,5 bis 3,0 liegt.

4. Plattiertes Stahlblech nach einem der Ansprüche 1 bis 3,
   wobei eine Korngröße in dem Bereich von 5 bis 11 in Bezug auf eine Austenitkorngrößenzahl liegt.

**Revendications**

1. Plaque d'acier revêtue comprenant : de 0,05 à 0,10 % en masse de C ; de 0,10 à 0,30 % en masse de Si ; de 1,30 à 1,70 % en masse de Mn ; 0,015 % ou moins en masse de P ; 0,005 % ou moins en masse de S ; de 0,10 à 0,60 % en masse de Ni ; de 0,10 à 0,45 % en masse de Cr ; de 0,05 à 0,40 % en masse de Cu ; de 0,05 à 0,40 % en masse de Mo ; de 0,02 à 0,06 % en masse de V ; de 0,03 à 0,10 % en masse de Nb ; de 0,005 à 0,025 % en masse de Ti ; de 0,020 à 0,050 % en masse d'Al ; de 0,0010 à 0,0040 % en masse de Ca ; et de 0,0030 à 0,0100 % en masse de N, le reste incluant du Fe et des impuretés inévitables et dans laquelle la teneur en Ni, Cr, Cu et Mo satisfait l'équation 0,90 % ≤ (Ni + Cr + Cu + Mo) ≤ 1,20 %,
   une microstructure du métal de base comprenant une structure martensitique.

2. Plaque d'acier revêtue selon la revendication 1,
   où dans la composition, un équivalent en carbone (Ceq) dans l'équation 1 est dans la plage de 0,380 à 0,480 et un facteur de susceptibilité à la fissuration à froid des soudures (PCM) dans l'équation 2 est inférieur ou égal à 0,200, où

(Équation 1)

Ceq = C + Mn/6 + (Cu + Ni)/15 + (Cr + Mo + V)/5 (% en masse) ;

et

(Équation 2)

PCM = C + Si/30 + Mn/20 + Cu/20 + Ni/60 + Cr/20 + Mo/15 + V/10 (% en masse).

3. Plaque d'acier revêtue selon la revendication 1 ou 2,
   dans laquelle un rapport Ti/N est dans la plage de 1,5 à 3,0.

4. Plaque d'acier revêtue selon l'une quelconque des revendications 1 à 3,
   dans laquelle une taille de grain est dans la plage de 5 à 11 en termes de numéro de grain d'austénite.

**EP 2 128 294 B1**

**REFERENCES CITED IN THE DESCRIPTION**

**Patent documents cited in the description**

- EP 1726675 A
- JP 2006328460 A
- JP 2007131925 A